# EUROPEAN PATENT APPLICATION

(11) **EP 3 258 621 A1**
(43) Date of publication of application: **20.12.2017**
(21) Application number: 15871542.5
(22) Date of filing: 24.04.2015
(51) Int. Cl.: H04B 10/071

(54) **INTELLIGENT ODN MARKING SYSTEM AND DEVICE**

(30) Priority: 24.12.2014 CN 201410817212
(71) Applicant: ZTE Corporation, Shenzhen, Guangdong 518057 (CN)
(72) Inventor: HAO, Xiangyong, Shenzhen Guangdong 518057 (CN); MA, Aiping, Shenzhen Guangdong 518057 (CN); XU, Jidong, Shenzhen Guangdong 518057 (CN); GONG, Yu, Shenzhen Guangdong 518057 (CN)
(74) Representative: Regimbeau
(86) International application number: PCT/CN2015/077432
(87) International publication number: WO 2016/101466

(57) **Abstract**

Provided are an intelligent ODN marking system and device. The device includes a marker, an optical fiber connector and an optical fiber splice recognizer. The marker includes a marking light module and an optical coupler. The marking light module is configured to generate marking light and output the marking light to the optical coupler; and output a signal indicating a reliable connection after receiving marking light fed back by the optical coupler. The optical coupler is configured to couple, to an optical port, the marking light output by the marking light module and output the marking light through a connected optical fiber jumper to a receiving end; and feed back, to the marking light module, marking light sent through the optical fiber jumper by the receiving end. The marker is applied to the intelligent ODN marking system, so that the optical fiber jumper can be effectively marked by means of the marking light without changing the original cable diameter.

## Description

### TECHNICAL FIELD

The embodiments of the present invention relate to the communications, and in particular, to an Optical Distribution Network (ODN) system and device.

### BACKGROUND

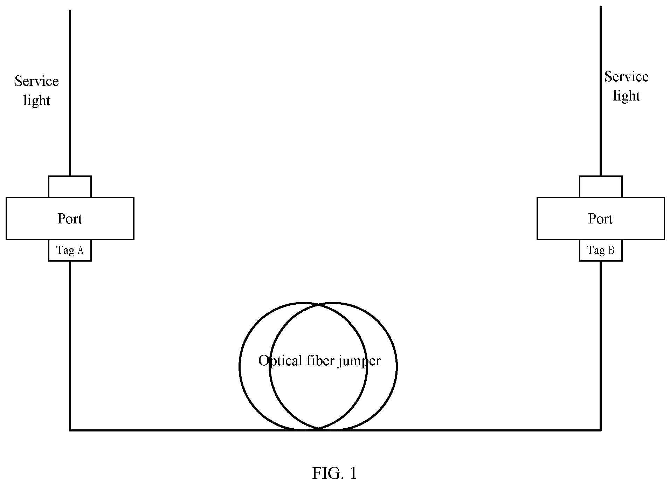

Currently, in the field of optical distribution, physical distribution and connections are required for a large number of optical fiber jumpers and pigtails. However, how to precisely position the target among the large number of optical fiber jumpers and pigtails remains a difficult problem. The existing solutions are as follows:
Technology 1: As illustrated in FIG. 1, tags are printed/pasted/tied onto electric cables. In this technology, tags are easily scattered or lost, writing may be illegible and a target end is positioned by means of checking tag information one by one. These features result in defects such as low search efficiency and error proneness.
Technology 2: The two ends of a cable assembly are illuminated by light-emitting diodes (LEDs) to position the two ends of a cable. In this technology, cable types are limited. Specifically, this technology is applicable only to cables with metal reinforcement or a similar structure capable of providing a metal conduction loop for the LEDs.
Technology 3: Plastic optical fibers are illuminated to identify the two ends of an optical fiber jumper. In this technology, despite the direct, efficient and accurate identification method, quartz optical fibers and plastic optical fibers coordinate with each other, resulting in an increased fiber size and an increased cable volume in the entire distribution system, thus increasing the difficulty in managing cables in terms of capacity.
Technology 4: A quartz optical fiber and multiple plastic optical fibers are integrated with an optical fiber jumper connector to transmit identification signals, where the quartz optical fiber transmits services and the plastic optical fibers transmit identification information.
Technology 5: Electronic tags are added to an optical fiber jumper connector to display and track optical fiber jumper information. This technology has the advantage of high efficiency but cannot completely overcome the risk of entering incorrect tag information.

In summary, in technologies 1 to 3, the two ends of an optical fiber jumper can be directly identified but connectors at the two ends cannot be identified directly by means of visual inspection; in technology 4, a quartz optical fiber and multiple glass optical fibers are connected through buckles, increasing the physical diameter size of an optical fiber jumper and reducing distribution capacity; and in technology 5, there is the risk of entering incorrect tag information. It can be seen that the existing optical fiber jumper identification technologies each have their respective disadvantages that affect the identification efficiency. Therefore, to solve this problem, it is urgent to put forward a solution to identify an optical fiber jumper without changing the original cable diameter or entering tag information.

### SUMMARY

To solve the above problem, the present invention provides an intelligent ODN marking system and device to improve the efficiency of identifying an optical fiber jumper.

According to an embodiment of the present invention, provided is a marker, including a marking light module and an optical coupler, wherein
the marking light module is configured to generate marking light and output the marking light to the optical coupler, and output a signal indicating a reliable connection after receiving marking light fed back by the optical coupler; and
the optical coupler is configured to couple, to an optical port, marking light outputted by the marking light module and transmit the marking light through a connected optical fiber jumper to a receiving end; and receive marking light sent through the optical fiber jumper by the receiving end and feed back marking light to the marking light module.

According to another embodiment of the present invention, provided is an optical fiber connector, including the marker of the present invention and an indicator light connected to the marker, where a display status of the indicator light is controlled by the marker.

According to a third embodiment of the present invention, provided is an optical fiber splice recognizer, including: an optical processor, a second controller and an indicator light, where
the optical processor is configured to send a notification message to the second controller after receiving marking light sent through an optical fiber jumper by a sending end and feed back marking light through the optical fiber jumper to the sending end; and
the second controller is configured to control the indicator light to be displayed in a preset manner after receiving the notification message.

According to a fourth embodiment of the present invention, provided is an intelligent ODN marking system, including: a main controller, an optical fiber connector 1, an optical fiber connector 2, an optical fiber splice recognizer and a plurality of optical fiber jumpers, where
the main controller is configured to write coded information of a target optical fiber jumper to a marker of the optical fiber connector 1 and a marker of the optical fiber connector 2 and control the marker of the optical fiber connector 1 and the marker of the optical fiber connector 2 to detect an optical link connection reliability;
the optical fiber connector 1 is connected to a port A at one end of the target optical fiber jumper and the optical fiber splice recognizer is connected to a port B at the other end of the target optical fiber jumper; and the optical fiber connector 1 detects, by using the marker to interchange marking light with the optical fiber splice recognizer, a connection reliability of an optical link formed by the optical fiber connector 1, the target optical fiber jumper and the optical fiber splice recognizer, and indicates a detection result through indicator lights on the optical fiber connector 1 and the optical fiber splice recognizer; and
when the optical link formed by the optical fiber connector 1, the target optical fiber jumper and the optical fiber splice recognizer is reliably connected, the optical fiber connector 2, in place of the optical fiber splice recognizer, is connected to the port B of the target optical fiber jumper; and the marker of the optical fiber connector 1 and the marker of the optical fiber connector 2 detect, by means of mutual handshake communication, a connection reliability of an optical link formed by the optical fiber connector 1, the target optical fiber jumper and the optical fiber connector 2, and indicate a detection result through indicator lights on the optical fiber connector 1 and the optical fiber connector 2.

Embodiments of the present invention have the following beneficial effects:
According to the embodiments of the present invention, marking light is used to detect connection reliability of an optical link and indicator lights are used to directly display the reliability. The embodiments solve the problem of the existing optical fiber jumper identification technologies which have a low identification efficiency because the optical fiber cable diameter needs to be changed or tag information needs to be entered, and thus has the technical effects of directly and efficiently identifying the two ends of an optical fiber jumper, avoiding the risk of incorrect information about tags at the two ends of the optical fiber jumper and identifying connection reliability of the two ends of the optical fiber jumper.

### BRIEF DESCRIPTION OF DRAWINGS

To illustrate embodiments of the present invention or technical solutions in the related art more clearly, the following briefly describes appended drawings needed in description of the embodiments or the related art. Apparently, the appended drawings described herein are merely part of embodiments of the present invention and those skilled in the art may obtain other drawings based on these appended drawings on the premise that they do not expend creative labor.
FIG. 1 is a structure diagram illustrating an existing intelligent optical fiber jumper.
FIG. 2 is a structure diagram illustrating a marker according to an embodiment of the present invention.
FIG. 3 is a structure diagram illustrating a marking light module according to an embodiment of the present invention.
FIG. 4 is a structure diagram illustrating an optical fiber connector according to an embodiment of the present invention.
FIG. 5 is a structure diagram illustrating an optical fiber splice recognizer according to an embodiment of the present invention.
FIG. 6 is structure diagram one illustrating an optical processor 410 according to an embodiment of the present invention.
FIG. 7 is structure diagram two illustrating the optical processor 410 according to an embodiment of the present invention.
FIG. 8 is an architecture diagram illustrating an intelligent ODN marking system according to an embodiment of the present invention.
FIG. 9 is another architecture diagram illustrating the intelligent ODN marking system according to an embodiment of the present invention.

### DETAILED DESCRIPTION

The embodiments of the present invention will be described clearly and completely in connection with the accompanying drawings in the embodiments of the present invention. The embodiments described below are part, not all, of the embodiments of the present invention. On the basis of the embodiments in the present invention, all other embodiments obtained by those skilled in the art with no creative labor extended are within the scope of the present invention.

### Embodiment one

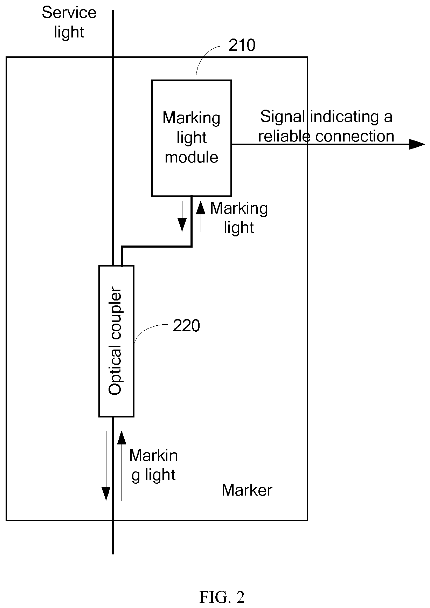

The present embodiment provides a marker, as illustrated in FIG. 2, including: a marking light module 210 and an optical coupler 220, where
the marking light module 210 is configured to generate marking light and output the marking light to the optical coupler 220; and output a signal indicating a reliable connection after receiving marking light fed back by the optical coupler 220; and
the optical coupler 220 is configured to couple, to an optical port, marking light outputted by the marking light module 210 and transmit the marking light through a connected optical fiber jumper to a receiving end; and receive marking light sent through the optical fiber jumper by the receiving end and feed back marking light to the marking light module 210.

Moreover, to be compatible with service light, the optical coupler 220 may further couple service light to an optical port and distribute service light from the optical port to a service light module that processes service light.

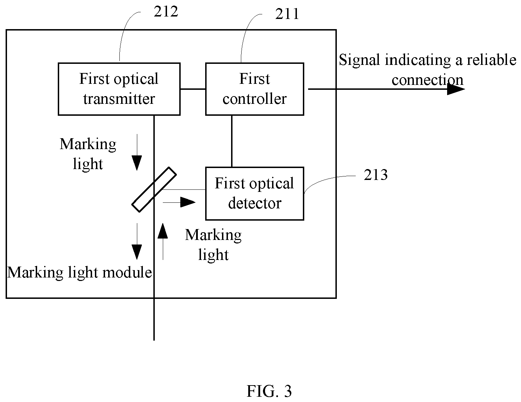

The marking light module 210, as illustrated in FIG. 3, includes: a first controller 211, a first optical transmitter 212 and a first optical detector213, where
the first controller 211 is configured to send a control instruction to the first optical transmitter 212;
the first optical transmitter 212 is configured to generate marking light after receiving the control instruction and transmit the marking light to the optical coupler 220;
the first optical detector 213 is configured to send a notification message to the first controller 211 after detecting marking light fed back by the optical coupler 220; and
the first controller 211 is further configured to output a signal indicating a reliable connection after receiving the notification message sent by the first optical detector 213.

In the present embodiment, since the marker is used for identifying the two ends of an optical fiber jumper, the wavelength of the marking light generated by the first light transmitter may be different from the wavelength of the service light transmitted by the optical fiber jumper. For example, an 850nm VCSEL light transmitter may be selected. The first optical detector is preferably a PIN photodiode in view of costs and cost effectiveness.

In the present embodiment, the marking light module may send and receive marking light through the same optical path. In this case, the marking light module may be provided with a reflection filter. The reflection filter can transmit marking light sent from the first optical transmitter 212 and reflect marking light from the optical coupler 220 to the first optical detector 213.

In the present embodiment, the optical coupler 220 may be an optical fiber coupler or a wavelength division multiplexing filter. The optical fiber coupler is preferably a Tap coupler.

The marker provided by the present embodiment can send marking light and can determine whether an optical link containing an optical fiber jumper is reliably connected by means of detecting whether marking light has been received, thus providing important support in identifying an optical fiber jumper.

### Embodiment two

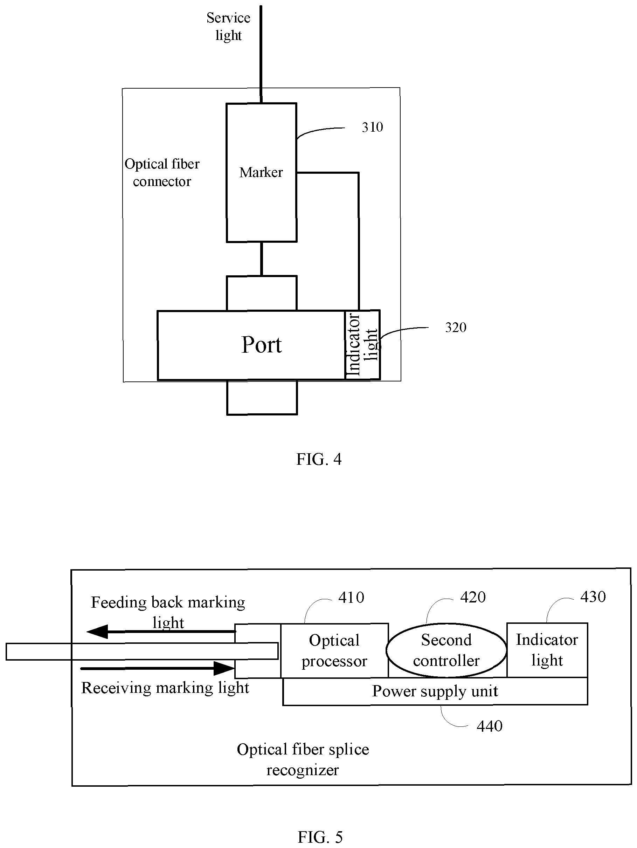

The present embodiment provides an optical fiber connector, as illustrated in FIG. 4, to which the marker 310 described in embodiment one and an indicator light 320 connected to the marker 310 are added based on the original architecture.

In the present embodiment, the structure and function of the marker 310 have been explained in embodiment one and will not be described herein.

In the present embodiment, the indicator light 320 is disposed at a visible position on the optical fiber connector panel and may be, but is not limited to, an LED light; and display status of the indicator light 320 is controlled by the marker 310 and includes color, being on/off, blinking frequency and so on.

In the present embodiment, by means of outputting a signal indicating a reliable connection, the marker 310 may control the indicator light 320 to illuminate in a preset manner to indicate a reliable connection.

The optical fiber connector of the present embodiment is integrated with the marker and the indicator light, and can be used to identify an optical fiber jumper effectively.

### Embodiment three

The present embodiment provides an optical fiber splice recognizer, as illustrated in FIG. 5, including: an optical processor 410, a second controller 420 and an indicator light 430, where
the optical processor 410 is configured to send a notification message to the second controller 420 after receiving marking light sent through an optical fiber jumper by a sending end and feed back marking light through the optical fiber jumper to the sending end; and
the second controller 420 is configured to control the indicator light 430 to be displayed in a preset manner after receiving the notification message. For example, the indicator light 430 is controlled to be steady green.

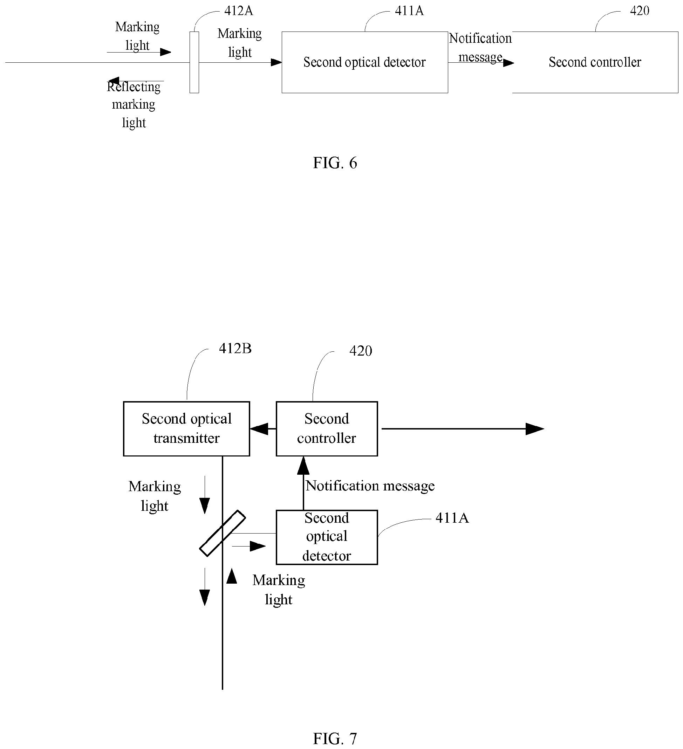

The optical processor 410 includes but is not limited to one of the following structures:
structure one: a second optical detector 411A and a reflector plate 412A, as illustrated in FIG. 6; and
structure two: the second optical detector 411A and a second optical transmitter 412B, as illustrated in FIG. 7.

In structure one:
the reflector plate 412A is a transflective filter and is configured to, after receiving marking light sent through an optical fiber jumper by a sending end, transmit part of the marking light to the second optical detector 411A and reflect part of the marking light to the sending end; and
the second optical detector 411A is configured to send the notification message to the second controller 420 after detecting the marking light transmitted by the reflector plate 412A.

In structure two:
the second optical detector 411A is configured to send the notification message to the second controller 420 after detecting marking light sent through the optical fiber jumper by the sending end;
the second controller 420 is further configured to send a control instruction to the second optical transmitter 412B after receiving the notification message; and
the second optical transmitter 412B is configured to generate marking light according to the control instruction sent by the second controller 420 and feed back the generated marking light through the optical fiber jumper to the sending end.

In the present embodiment, the optical processor 410 can send and receive marking light through the same optical path, so when using structure two, the optical processor 410 is further provided with a reflection filter. The reflection filter can transmit marking light sent by the second optical transmitter 412B and reflect marking light from the sending end to the second optical detector 411A. See FIG. 7.

The optical fiber splice recognizer of the present embodiment further includes: a power supply unit 440, which is configured to supply power to the optical processor 410, the second controller 420 and the indicator light 430.

The optical fiber splice recognizer of the present embodiment can receive and feed back marking light to provide support in detecting optical link reliability and can use the indicator light to directly display whether the connection is reliable.

### Embodiment four

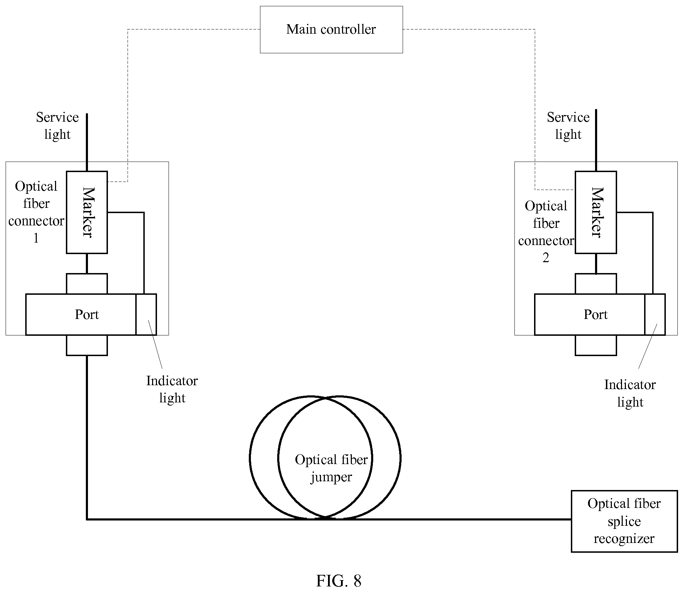

The present embodiment provides an intelligent ODN marking system, as illustrated in FIG. 8, including a main controller, an optical fiber connector 1, an optical fiber connector 2, an optical fiber splice recognizer and a plurality of optical fiber jumpers, where the optical fiber connector 1 and the optical fiber connector 2 are the optical fiber connectors described in embodiment two and the optical fiber splice recognizer is the optical fiber splice recognizer described in embodiment three. Specifically:
the main controller is configured to write coded information of a optical fiber jumper to a marker of the optical fiber connector 1 and a marker of the optical fiber connector 2 and control the marker of the optical fiber connector 1 and the marker of the optical fiber connector 2 to detect an optical link connection reliability;
the optical fiber connector 1 is connected to a port A at one end of the target optical fiber jumper and the optical fiber splice recognizer is connected to a port B at the other end of the target optical fiber jumper; and the optical fiber connector 1 detects, by using the marker to interchange marking light with the optical fiber splice recognizer, a connection reliability of an optical link formed by the optical fiber connector 1, the target optical fiber jumper and the optical fiber splice recognizer, and indicates a detection result through indicator lights on the optical fiber connector 1 and the optical fiber splice recognizer; and
when the optical link formed by the optical fiber connector 1, the target optical fiber jumper and the optical fiber splice recognizer is reliably connected, the optical fiber connector 2, in place of the optical fiber splice recognizer, is connected to the port B of the target optical fiber jumper; and the marker of the optical fiber connector 1 and the marker of the optical fiber connector 2 detect, by means of mutual handshake communication, a connection reliability of an optical link formed by the optical fiber connector 1, the target optical fiber jumper and the optical fiber connector 2, and indicate a detection result through indicator lights on the optical fiber connector 1 and the optical fiber connector 2.

In the present embodiment, after writing coded information of the target optical fiber jumper to the marker of the optical fiber connector 1 and the marker of the optical fiber connector 2, preferably, the main controller is further configured to activate, through markers, the indicator lights on the optical fiber connector 1 and the optical fiber connector 2 so that display status (for example, slowly blinking green) of the indicator lights indicates that the optical fiber connector 1 and the optical fiber connector 2 are to be connected.

In the present embodiment, the optical fiber connector 1 is configured to detect, by using the marker to interchange marking light with the optical fiber splice recognizer, the connection reliability of the optical link formed by the optical fiber connector 1, the target optical fiber jumper and the optical fiber splice recognizer as follows:
the optical fiber connector 1 is configured to send marking light to the optical fiber splice recognizer through the marker;
the optical fiber splice recognizer is configured to feed back marking light to the optical fiber connector 1 if the optical fiber splice recognizer receives the marking light sent by the optical fiber connector 1; otherwise determines that the optical link is unreliably connected; and
the optical fiber connector 1 is further configured to determine that the optical link is reliably connected if the optical fiber connector 1 receives the marking light fed back by the optical fiber splice recognizer; otherwise determines that the optical link is unreliably connected.

In the present embodiment, the marker of the optical fiber connector 1 and the marker of the optical fiber connector 2 are configured to detect, by means of mutual handshake communication, the connection reliability of the optical link formed by the optical fiber connector 1, the target optical fiber jumper and the optical fiber connector 2 as follows:
the optical fiber connector 1 and the optical fiber connector 2 are configured to
send marking light to each other through respective markers; and
determine that the optical link is reliably connected if the optical fiber connector 1 and the optical fiber connector 2 receive the marking light sent by each other; otherwise determine that the optical link is unreliably connected.

To illustrate the implementation process of the system of the present invention more clearly, a preferred embodiment of the present invention is provided below in connection with the actual application scenarios, and technical details of the present invention are also provided in connection with description of the embodiments so as to better illustrate the specific implementation process of the system of the present invention.

The following describes the process in which the system of the present embodiment performs intelligent ODN marking.

Step 1: The main controller sends an instruction indicating pending operation to the background. The background connects the marker of the optical fiber connector 1 to the marker of the optical fiber connector 2 according to the work order system and writes the coded information of the target optical fiber jumper to the markers. Preferably, the background writes the address of each mark to the respective marker by means of closed-loop handshake identification to ensure correct coded information of the optical fiber jumper. The main controller sends an indicator light activation instruction through the background to the marker of the optical fiber connector 1 and the marker of the optical fiber connector 2. After receiving the activation instruction, the main controller activates the LED indicator lights on the corresponding optical fiber connectors. Status 1 (for example, slowly blinking green) of the LED indicator lights indicates that the optical fiber connector 1 and the optical fiber connector 2 are in pending-operation and connected state.

Step 2: The port A1 of the optical fiber jumper (whose ports at the two ends are defined as A1 and B1 respectively) is connected to the optical fiber connector 1 and the port B1 is connected to the optical fiber splice recognizer.

Step 3: After receiving the detection instruction from the main controller, the marker of the optical fiber connector 1 sends marking light to the optical fiber splice recognizer.

Step 4: If receiving marking light sent by the marker of the optical fiber connector 1, the optical fiber splice recognizer feeds back marking light to the marker of the optical fiber connector 1 and controls the indicator light on the optical fiber splice recognizer itself to be steady green. If the optical fiber splice recognizer does not receive marking light sent by the marker of the optical fiber connector 1, the indicator light on the optical fiber splice recognizer does not illuminate, indicating that the optical link is unreliable.

The reason why the optical link is unreliable includes: the connection between the optical fiber connector 1 and the optical fiber jumper port A1 is unreliable, the connection between the optical fiber splice recognizer and the optical fiber jumper port B1 is unreliable, the optical fiber connector 1 and the optical fiber splice recognizer are connected to different optical fiber jumpers, the optical fiber jumper is faulty, the optical fiber splice recognizer is faulty, ports are abnormal, or other faults occur.

Step 5: If the marker of the optical fiber connector 1 receives marking light fed back by the optical fiber splice recognizer, the optical fiber connector 1 determines that the optical link is reliably connected and enables the indicator light on the optical fiber connector 1 to turn from slowly blinking green status to steady green status. If the marker of the optical fiber connector 1 does not receive marking light fed back by the optical fiber splice recognizer, the optical link is unreliable. In this case, the indicator light on the optical fiber connector 1 is still slowly blinking green and further troubleshooting is needed to pinpoint the cause of the unreliable connection.

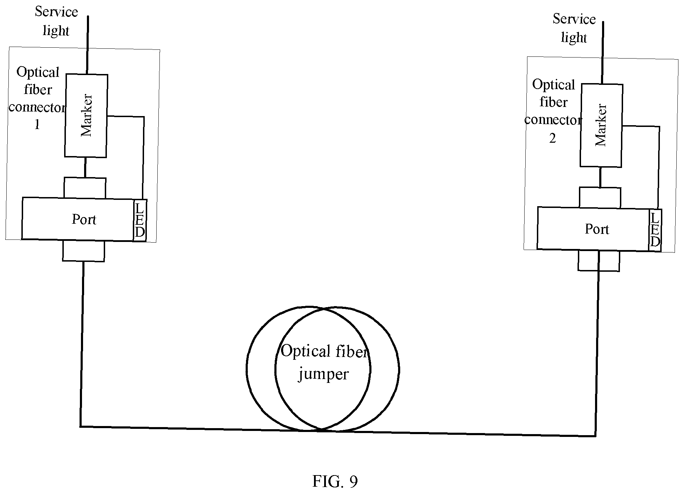

Step 6: The optical fiber splice recognizer is unplugged and the port B1 is reliably connected to the optical fiber connector 2. In this case, the system architecture diagram is illustrated in FIG. 9.

Step 7: Handshake communication is mutually performed between the optical fiber connector 1 and the optical fiber connector 2 through the markers. If the handshake communication fails, the two optical fiber connectors use their respective indicator lights to indicate the connection state. If the handshake communication succeeds, the optical fiber connector 1 is reliably connected to the port A1, the optical fiber connector 2 is reliably connected to the port B1, and the two ports are on the same optical fiber jumper. In this case, the indicator lights on the optical fiber connector 1 and the optical fiber connector 2 indicate a correct operation. After the indicator lights have been on for a period of time, the main controller may proactively turn off the indicator lights through the markers. Alternatively, the main controller does not perform any operation and the indicator lights that indicate the correct operation turn off automatically after having been steady on for a certain period of time.

After the operation is performed in the above way, quality inspector may use the markers to redetect the optical link. The redetection process is as follows:

The main controller sends a quality inspection instruction. The background connects the marker of the optical fiber connector 1 to the marker of the optical fiber connector 2 according to the work order system, and activates, through markers, the indicator lights on the optical fiber connectors. Then the status of indicator lights indicates that the optical fiber connector 1 and the optical fiber connector 2 are in the to-be-redetected stage (only for detecting whether the connection is correct and reliable because the connection of the optical fiber jumper has been completed). Handshake communication is mutually performed between the optical fiber connector 1 and the optical fiber connector 2. If both ends are reliably connected and the splice is correct, the indicator lights at the two ends turn off, indicating a correct and reliable connection. If the handshake communication fails, the indicators display alarm status. For example, the LED lights fast blink green.

It is apparent to those skilled in the art that various modifications and variations can be made in the present invention without departing from the spirit and scope of the invention. In this case, if such modifications and variations are within the claims of the present invention and equivalent technologies thereof, the present invention is intended to include such modifications and variations.

### INDUSTRIUAL APPLICABILITY

According to the embodiments of the present invention, marking light is used to detect connection reliability of an optical link and indicator lights are used to directly display the reliability. The embodiments solve the problem of the existing optical fiber jumper identification technologies which have a low identification efficiency because the optical fiber cable diameter needs to be changed or tag information needs to be entered, and thus has the effects of directly and efficiently identifying the two ends of an optical fiber jumper, avoiding the risk of incorrect information about tags at the two ends of the optical fiber jumper and identifying connection reliability of the two ends of the optical fiber jumper.

## Claims

1. A marker, comprising a marking light module and an optical coupler, wherein
the marking light module is configured to generate marking light and output the marking light to the optical coupler, and output a signal indicating a reliable connection after receiving marking light fed back by the optical coupler; and
the optical coupler is configured to couple, to an optical port, marking light outputted by the marking light module and transmit the marking light through a connected optical fiber jumper to a receiving end; and feed back, to the marking light module, marking light sent through the optical fiber jumper by the receiving end.

2. The marker of claim 1, wherein the marking light module comprises: a first controller, a first optical transmitter and a first optical detector, wherein
the first controller is configured to send a control instruction to the first optical transmitter;
the first optical transmitter is configured to generate marking light after receiving the control instruction and transmit the marking light to the optical coupler;
the first optical detector is configured to send a notification message to the first controller after detecting marking light fed back by the optical coupler; and
the first controller is further configured to output a signal indicating a reliable connection after receiving the notification message sent by the first optical detector.

3. The marker of claim 1, wherein the optical coupler comprises one of an optical fiber coupler and a wavelength division multiplexing filter.

4. An optical fiber connector, comprising: the marker of any one of claims 1 to 3 and an indicator light connected to the marker, wherein a display status of the indicator light is controlled by the marker.

5. An optical fiber splice recognizer, comprising: an optical processor, a second controller and an indicator light, wherein
the optical processor is configured to send a notification message to the second controller after receiving marking light sent through an optical fiber jumper by a sending end and feed back marking light through the optical fiber jumper to the sending end; and
the second controller is configured to control the indicator light to be displayed in a preset manner after receiving the notification message.

6. The optical fiber splice recognizer of claim 5, wherein the optical processor comprises: a second optical detector and a second optical transmitter, wherein
the second optical detector is configured to send the notification message to the second controller after detecting marking light sent through the optical fiber jumper by the sending end;
the second controller is further configured to send a control instruction to the second optical transmitter after receiving the notification message; and
the second optical transmitter is configured to generate marking light according to the control instruction sent by the second controller and feed back the generated marking light through the optical fiber jumper to the sending end.

7. The optical fiber splice recognizer of claim 5, wherein the optical processor comprises: a second optical detector and a reflector plate, wherein
the reflector plate is configured to, after receiving marking light sent through the optical fiber jumper by the sending end, transmit part of the marking light to the second optical detector and reflect part of the marking light to the sending end; and
the second optical detector is configured to send the notification message to the second controller after detecting the marking light transmitted by the reflector plate.

8. The optical fiber splice recognizer of any one of claims 5 to 7, further comprising: a power supply unit, which is configured to supply power to the optical processor, the second controller and the indicator light.

9. An intelligent Optical Distribution Network (ODN) marking system, comprising: a main controller, an optical fiber connector 1, an optical fiber connector 2, an optical fiber splice recognizer and a plurality of optical fiber jumpers, wherein
the main controller is configured to write coded information of a target optical fiber jumper to a marker of the optical fiber connector 1 and a marker of the optical fiber connector 2 and control the marker of the optical fiber connector 1 and the marker of the optical fiber connector 2 to detect an optical link connection reliability;
the optical fiber connector 1 is connected to a port A at one end of the target optical fiber jumper and the optical fiber splice recognizer is connected to a port B at the other end of the target optical fiber jumper; and the optical fiber connector 1 detects, by using the marker to interchange marking light with the optical fiber splice recognizer, a connection reliability of an optical link formed by the optical fiber connector 1, the target optical fiber jumper and the optical fiber splice recognizer, and indicates a detection result through indicator lights on the optical fiber connector 1 and the optical fiber splice recognizer; and
when the optical link formed by the optical fiber connector 1, the target optical fiber jumper and the optical fiber splice recognizer is reliably connected, the optical fiber connector 2, in place of the optical fiber splice recognizer, is connected to the port B of the target optical fiber jumper; and the marker of the optical fiber connector 1 and the marker of the optical fiber connector 2 detect, by means of mutual handshake communication, a connection reliability of an optical link formed by the optical fiber connector 1, the target optical fiber jumper and the optical fiber connector 2, and indicate a detection result through indicator lights on the optical fiber connector 1 and the optical fiber connector 2.

10. The system of claim 9, wherein after writing the coded information of the target optical fiber jumper to the marker of the optical fiber connector 1 and the marker of the optical fiber connector 2, the main controller is further configured to:
activate, through markers, the indicator lights on the optical fiber connector 1 and the optical fiber connector 2 so that display status of the indicator lights indicates that the optical fiber connector 1 and the optical fiber connector 2 are to be connected.

11. The system of claim 9 or 10, wherein the optical fiber connector 1 is configured to detect, by using the marker to interchange marking light with the optical fiber splice recognizer, the connection reliability of the optical link formed by the optical fiber connector 1, the target optical fiber jumper and the optical fiber splice recognizer as follows:
the optical fiber connector 1 is configured to send marking light to the optical fiber splice recognizer through the marker;
the optical fiber splice recognizer is configured to feed back marking light to the optical fiber connector 1 if the optical fiber splice recognizer receives the marking light sent by the optical fiber connector 1; otherwise determines that the optical link is unreliably connected; and
the optical fiber connector 1 is further configured to determine that the optical link is reliably connected if the optical fiber connector 1 receives the marking light fed back by the optical fiber splice recognizer; otherwise determines that the optical link is unreliably connected.

12. The system of claim 9 or 10, wherein the marker of the optical fiber connector 1 and the marker of the optical fiber connector 2 are configured to detect, by means of mutual handshake communication, the connection reliability of the optical link formed by the optical fiber connector 1, the target optical fiber jumper and the optical fiber connector 2 as follows:
the optical fiber connector 1 and the optical fiber connector 2 are configured to send marking light to each other through respective markers; and
determine that the optical link is reliably connected if the optical fiber connector 1 and the optical fiber connector 2 receive the marking light sent by each other; otherwise determine that the optical link is unreliably connected.
